# FASCICULE DE BREVET EUROPEEN

(11) **EP 1 194 868 B1**
(45) Date de publication et mention de la délivrance du brevet: **11.02.2004**
(21) Numéro de dépôt: 00925422.8
(22) Date de dépôt: 10.05.2000
(51) Int. Cl.: G06F 17/22

(54) **METHODE ET SYSTEME DE CREATION DE DOCUMENTS ELECTRONIQUES - AUTO-PUBLIANTS ET ADAPTATIFS**
VERFAHREN UND SYSTEM ZUM ERSTELLEN VON SICH SELBST PUBLIZIERENDEN UND ADAPTIERENDEN ELEKTRONISCHEN DOKUMENTEN
METHOD AND SYSTEM FOR CREATING SELF-PUBLISHING AND ADAPTIVE ELECTRONIC DOCUMENTS

(30) Priorité: 11.05.1999 FR 9906444
(43) Date de publication de la demande: 10.04.2002
(73) Titulaire: Kankoon S.A.S., 75008 Paris (FR)
(72) Inventeur: Clausse, Julien, 92200 Neuilly (FR)
(86) Numéro de dépôt international: PCT/FR2000/001252
(87) Numéro de publication internationale: WO 2000/068828

(56) Documents cités:
- VITALI F ET AL: "Extending HTML in a principled way with displets" COMPUTER NETWORKS AND ISDN SYSTEMS,NL,NORTH HOLLAND PUBLISHING. AMSTERDAM, vol. 29, no. 8-13, septembre 1997 (1997-09), page 1115-1128 XP004095309 ISSN: 0169-7552
- LUQUE CENTENO V ET AL: "Personalizing your electronic newspaper" EUROMEDIA '99, EUROMEDIA'99, MUNICH, GERMANY, 26-28 APRIL 1999, [en ligne] pages 16-22, XP002146193 1999, San Diego, CA, USA, SCS, USA ISBN: 1-56555-169-9 Extrait de l'Internet: <URL:http://www.it.uc3m.es/~per/doc/webtec /webtec.html> [extrait le 2000-08-30]
- BATTLE S A ET AL: "Flexible information presentation with XML" IEE COLLOQUIUM MULTIMEDIA DATABASES AND MPEG-7 (REF. NO.1999/056), IEE COLLOQUIUM MULTIMEDIA DATABASES AND MPEG-7, LONDON, UK, 29 JAN. 1999, pages 13/1-6, XP002128574 1999, London, UK, IEE, UK
- J. BOSAK: "XML: The Universal Publishing format" SGML/XML EUROPE '98, [en ligne] 19 mai 1998 (1998-05-19), pages a1-c17, XP002128575 Paris Extrait de l'Internet: <URL:http://metalab.unc.edu/pub/sun-info/s tandards/xml/pres/9805eur/sld00000.htm> [extrait le 2000-01-25]

## Description

### 1 / Art antérieur.

La société Time Base PTY, Limited, par le brevet WO9384179, publié le 6 Août 1998 décrit un système de publication électronique utilisant le SGML, XML accompagné de fichiers DTD (Document Type Definition) ou SSM (Style Sheet Mechanisms). Ils ont obtenus un brevet couvrant les moyens de découper des blocs de données et de les organiser sous forme de champs comme une base de donnée.

La société IBM par la demande du brevet européen EP0818742, publié le 14 Janvier 1998, décrit un manière d'exécuter des données enregistrées à une adresse URL en ouvrant une fenêtre HTML dans un document HTML lui-même, par le biais d'une applet (ou routine) Java.

L'article « Les applications Java voyagent par un réseau électronique » publié le 1^{er} Février 1996 dans le numéro 56 de « Actualités outils » pages 8/9, écrit par Gross Catherine, décrit les applets Java. Mais cela concerne uniquement HTML, langage de marquage (markup language) aux tags prédéfinis et donc sans soucis de publication de la donnée entre les tags.

VITALI F ET AL: 'Extending HTML in a principled way with displets' COMPUTER NETWORKS AND ISDN SYSTEMS,NL,NORTH HOLLAND PUBLISHING. AMSTERDAM, vol. 29, no. 8-13, septembre 1997 (1997-09), page 1115-1128 XP004095309 ISSN: 0169-7552 décrit une méthode et un système de publication et de traitement de données structurées sous forme d'attributs (tags) par un système de traitement de documents éditées à l'aide d'un langage de marquage (HTML). Les données incluses dans au moins un des attributs d'un document sont représentées par ce système à l'aide d'au moins une routine (displet) associée à cet attribut dont le code est indépendant de la plate-forme d'exécution (code java) et est fourni avec l'attribut. La routine associée à un attribut est intégrée dans le document et sert à rendre graphiquement un objet non défini précédemment en HTML. Il n'est pas possible d'adapter un autre type de représentation une fois que le document est finalisé; les displets ne sont pas paramétrables.

### 2/ Présentation.

La présente invention consiste en la publication de manière « universelle » et capable d'adaptation de données structurées par un «markup language » et en particulier selon le standard XML (i.e. de documents XML) grâce à l'utilisation d'applets Java, incluses dans ce document. Ainsi, une applet (ou routine) java située dans le document XML au même titre que la donnée prend comme paramètre cette donnée et la publie selon la manière dont son créateur l'a voulu. Dés lors, il n'est plus nécessaire au browser (ou butineur) à l'application de reconnaître une infinité de tag pour représenter la donnée, mais d'être juste capable de lire du Java. La donnée est alors intelligente car elle s'auto-publie, et, en outre, elle est capable d'adaptation. En effet, la publication de la donnée peut changer selon des critères d'optimisation, de culture, technologiques ou encore personnels, la donnée restant toujours intrinsèquement la même.

La présente invention propose donc aussi un outil permettant de créer de tels documents auto-publiants et adaptatif, de manière intuitive.

Avant de pouvoir décrire l'invention elle-même, il semble nécessaire de succinctement décrire les technologies sur lesquelles elle se base. Ces deux technologies sont d'une part le langage Java et d'autre part XML.

### 3/ Introduction.

### a- Le langage Java.

Java est un langage de programmation qui fut créé par Sun Microsystems en 1995.

Il dût son succès immédiat à l'Internet. En effet, sa principale qualité en faisait l'outil rêvé de la Toile : Java est un langage multi-plateformes - un même programme pouvant être exécuter sur des ordinateurs aussi variés qu'un PC, un ordinateur d'Apple ou encore une machine Unix. Il a donc cette dimension « universelle » qui permet au développeur d'écrire son programme sans soucis du système sur lequel il va tourner.

Ces programmes, lorsqu'ils sont inclus au sein d'une page Web, prennent le nom « d'applets ». Dans toute la suite du présent brevet, le terme d'applet sera employé par relation avec l'Internet. Cependant, les idées exposées sont aussi applicables avec des applications (programmes autonomes non nécessairement liés à l'Internet) écrite en Java.

### b- XML (eXtensible Markup Language)

Promu et ratifié (en février 1998) par le World Wide Web Consortium (W3C) XML permet de normaliser la définition des formats pour présenter les informations comme des documents structurés. Si Java est un moyen « universel » de traiter l'information, XML, lui est un moyen « universel » de la coder.

XML se rapproche étrangement de HTML au niveau de sa sémantique (ils sont tous deux dérivés de la même racine qui est SGML), mais ils sont cependant totalement différents. HTML se contente de publier les données, alors que XML donne la possibilité de les traiter.

Le brevet EP0818742 (Embedded HTML documents), par exemple, présente une façon de publier des documents HTML au sein d'autres documents HTML. Mais il reste lié au fait qu'HTML est un langage de publication uniquement et qu'il ne permet pas de traiter les données elles-mêmes. Il doit se soumettre au groupe de tags proprement définis pour HTML C'est d'ailleurs parce que c'est du HTML que la donnée peut-être publiée sans problèmes. Il n'est pas confronté aux même problèmes techniques que dans notre cas.

Mais que dire de la publication d'un document XML ?

### 4/ Position du problème.

Ce qui fait la force de XML est la possibilité pour tout utilisateur de définir ses propres « tags » (ou « balises », en français). En HTML, par exemple, le tag <TABLE> permettra d'inclure un tableau dans le document. Mais, HTML possède un nombre fini de tags qui sont pré-définis.

XML, en revanche, permet de créer ses propres tags. Ainsi, si un utilisateur désire que la donnée qu'il va inclure entre les limites de ce tag soit considérée comme étant une intégrale, il définira son tag <INTEGRALE> (qui n'existe pas en HTML). Dés lors, lorsque son document sera traité, la donnée sera utilisée comme étant une intégrale. XML permettant de coder la donnée de manière réutilisable, il permet d'améliorer la qualité de recherche d'un document sur la Toile, par exemple, en ne recherchant que le tag concerné. Les résultats obtenus seront beaucoup plus en accord avec les désirs de l'utilisateur.

L'utilisateur peut donc donner à chaque donnée de son document la référence qui lui permettra d'être utilisée comme elle doit l'être (on ne traite pas de la même manière les comptes d'une entreprise et les stocks de CD musicaux d'une grande chaîne de distribution, par exemple). C'est en ce sens qu'XML est un moyen universel de coder les données, tout simplement parce qu'il permet à chacun de les structurer selon ses besoins.

Il faut donc garder à l'esprit qu'il y a une infinité de tags possible pour XML. Cet aspect est flagrant lorsque l'on commence à s'intéresser à toutes les différentes « normes » qui voient le jour pour un domaine particulier (CXML et ICE pour l'e-commerce, SpeechML et VXML pour la communication ou encore 3DXML et DrawXML pour le graphisme). Toutes ses « normes » existent car il y a un réel besoin de ces outils (e-commerce, communication, graphisme etc...) sur la Toile. Le problème est que, pour un même domaine, ces normes sont légions, et il n'y a pas vraiment de standardisation. En outre, il existe potentiellement autant de groupement de tags que de domaines (c'est-à-dire une infinité). Dés lors, comment publier une donnée dans un browser en ne connaissant *a priori* pas à l'avance le tag et donc son sens intrinsèque qui pourrait suggérer sa représentation?

Avec HTML, langage de publication, la chose était facile : il suffisait au browser de supporter la norme HTML et de publier l'objet comme il se doit (le texte sera défini par une « font », un style et une couleur, une image sera l'affichage du fichier contenant l'image etc...). Mais, avec XML, le browser n'a aucun moyen de savoir comment représenter le tag <RADIO> ou <CONSTITUTION>. Il peut, au mieux, transformer le document XML en un défaut HTML i.e. publier le texte uniquement.

Ainsi, dans le brevet WO9834179 (A system for electronic publishing), suggère un moyen de structurer les données dans un espace multidimensionnel en vue de sa publication. Mais aucune solution n'est proposée quant à la représentation même de la donnée, qui est transcrite en HTML, par exemple.

Aujourd'hui, si l'utilisateur définit un tag <ACTEUR> dans le contexte d'une pièce de théâtre, et un tag <REPLIQUE> correspondant à son texte, le défaut pour un browser XML sera très certainement celui d'afficher le nom de l'acteur et son texte à la suite (C'est le cas dans Internet Explorer 4.0, qui implémente un début de browser XML). Comment alors, par exemple, le créateur de la page XML peut-il publier son acteur et sa réplique non sous la forme d'un texte, mais sous la forme d'une image incarnant l'acteur et d'une réplique parlée par cette image (la donnée reste la même, mais c'est bien sa publication qui change)?

### 5/ Solution.

La présente invention propose d'associer à un tag quelconque d'un markup language - et en particulier d'XML - défini par l'auteur du document une représentation sous la forme d'une applet Java qui lui permettra d'être publié dans n'importe quel browser (on-line ou off-line) supportant Java ou toute autre application supportant Java (réunis sous le terme générique de « browser » dans tout ce document ).

Prenons l'exemple des ventes d'une entreprise. Les données (les résultats des ventes) sont codées en XML et restent les mêmes durant toute la publication. Cependant, l'utilisateur, plutôt que de les présenter sous forme de texte (qui serait peu attrayant) décide de les représenter sous la forme d'un histogramme.

Comment des représentations que l'utilisateur aura lui-même créées peuvent-elles être publiées dans un browser qui ne les connaît pas ? La présente invention propose que la représentation du tag (et plus généralement de la donnée qu'il code) soit écrite sous la forme d'une applet Java. Dés lors cette représentation pourra être lue par n'importe quel browser supportant Java.

### 6/ Procédé.

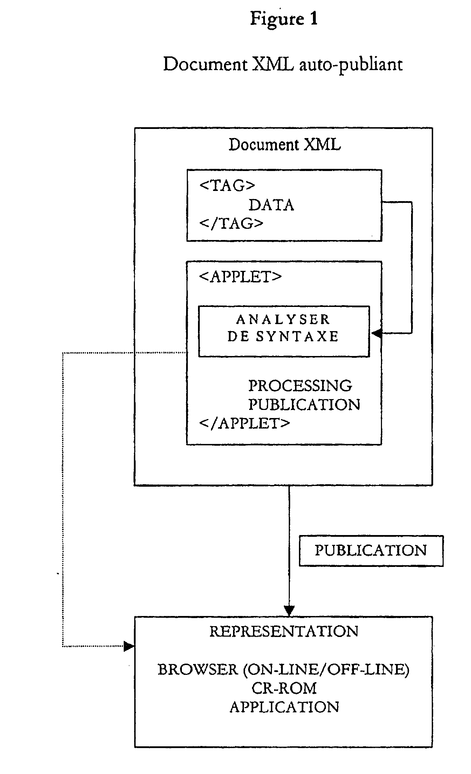

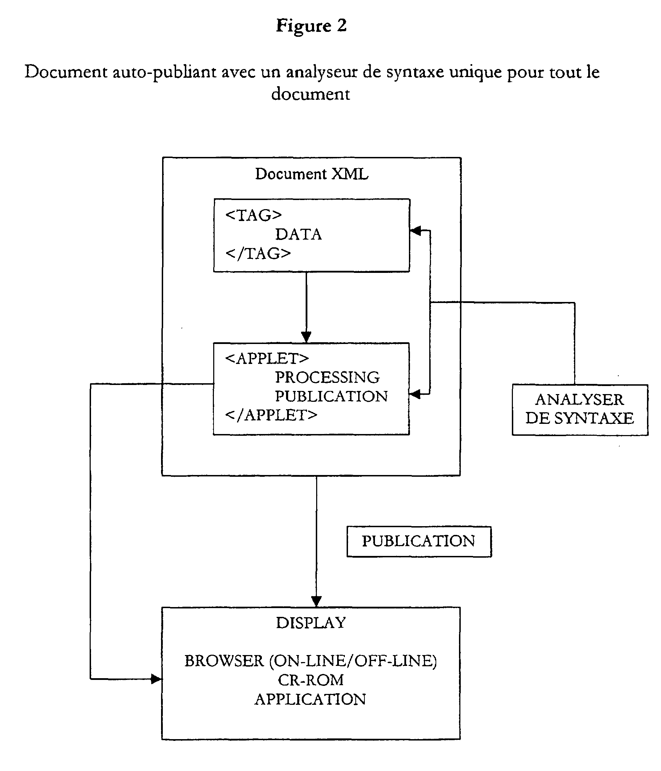

L'applet peut suivre directement le tag concerné (figure 1) ou alors peut lui être associé sur l'ensemble du document (figure 2). L'applet peut aussi être en relation avec le tag comme un attribut de ce tag. Par exemple <TAG REPRESENTATION = APPLET>. Cela implique cependant que le browser ou l'application soit familier avec une telle sémantique.
L'applet prend comme paramètres le contenu du tag (par exemple le contenu des ventes) - car c'est du XML. En effet, XML permet bien la manipulation de la donnée. Cette donnée peut-être récupérée grâce à un analyseur de syntaxe (ou « parser ») inclus dans la même applet ou une applet externe générique, ou alors en prenant les données analysées par le browser pour peu que le dit browser laisse l'accès aux données analysées à l'applet Java.

A partir de ce moment, l'applet Java traite la donnée comme voulue par le créateur de la page. La représentation de la donnée s'inclue toute seule dans la page du document représentée au sein du browser ou de l'application et forme un document unique dans sa publication. Cette représentation peut couvrir tout l'éventail des sens (odorat, toucher, vue, ouïe, goût) car la perception d'une information - d'une donnée - peut se faire par tous ses moyens.

Ainsi, les ventes de la compagnie seront représentées à l'écran sous la forme d'un histogramme et non sous la forme textuelle, et ce, sans que le browser ait à faire quoique ce soit d'autre que de reconnaître et lire du Java (ce qui est le cas des browsers actuels) : il laisse la donnée s'auto-traiter et s'auto-publier car elle est « intelligente ». En outre, cette applet est incluse dans le document à publier, mais on peut penser qu'elle peut aussi se trouver sur un site distant et que seul un lien pointant vers cette applet est inclus dans le document, afin d'en réduire la taille, mais le principe de l'invention reste identique.

### 7/ Exemples.

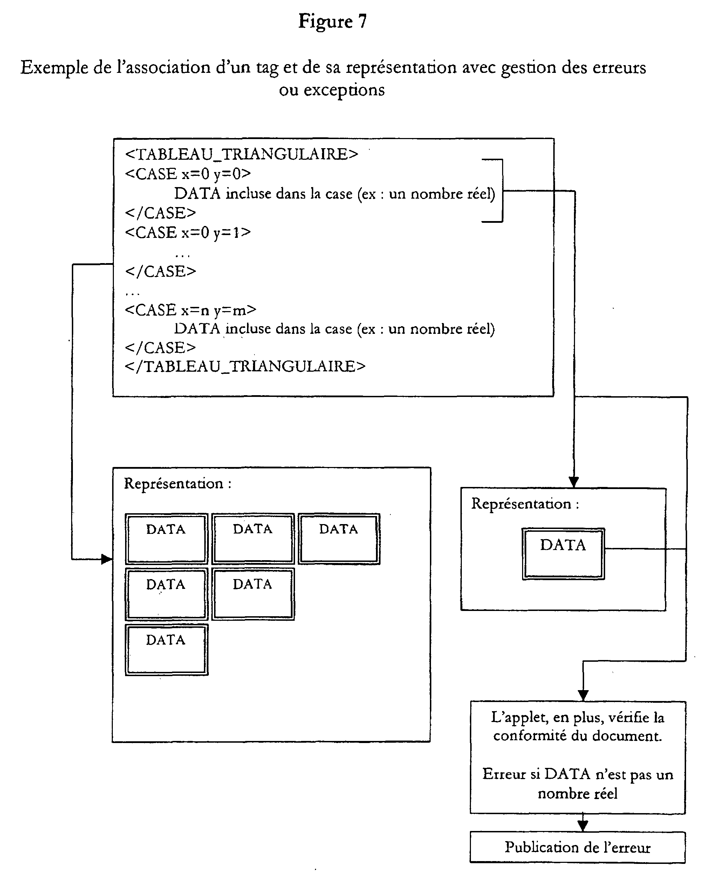

Ce pourrait être un moyen de gérer les exceptions en XML par exemple. Ainsi, comme montré dans la figure 7, si la donnée définie par le tag <CASE> est sensée être un nombre réel et non une chaîne de caractères, l'applet peut le tester et lancer un message d'erreur si la donnée n'est pas conforme à ce qu'elle attend. Un tel procédé permet de gérer les erreurs dans XML.

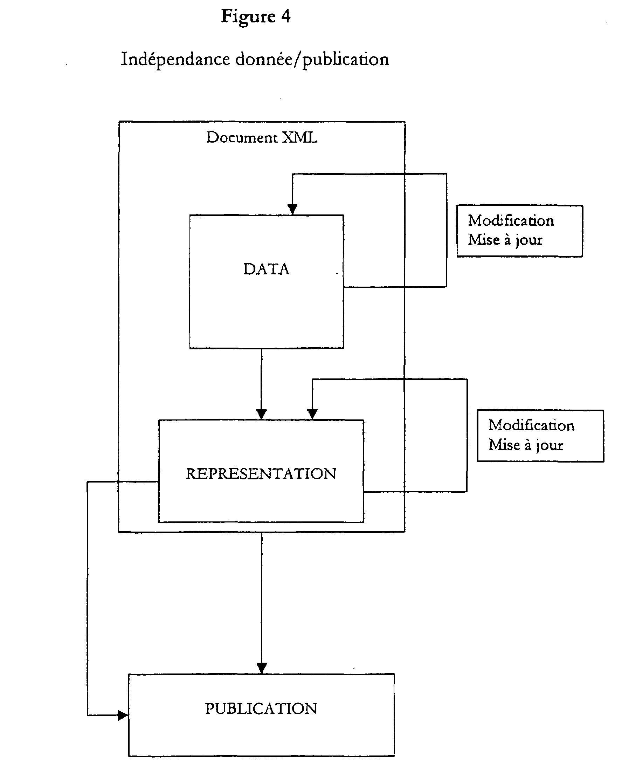

En outre, comme montré dans la figure 4, la présente invention permet de modifier les données (par exemple de réactualiser les chiffres des ventes l'année suivante dans le document XML) tout en conservant son type de publication. Plutôt que de tout réécrire, il suffit de changer le fichier XML mais la publication reste identique. Dés lors, l'entreprise, ou tout autre utilisateur, peut aisément utiliser XML comme standard pour sauvegarder ses données et les traiter de manière interne (au sein de son intranet, par exemple), tout en conservant un moyen de publication (on pourrait presque dire une « identité de publication ») lui permettant d'exposer ses données à toute personne désireuse de les consulter. L'entreprise peut définir ses propres standards de publication qui lui donneront cet aspect différent des autres et qui la fera aisément reconnaissable au sein de la multitude.

De la même manière, la publication de la donnée peut être modifiée en changeant l'applet Java uniquement, sans modifier la donnée. Ainsi, un histogramme peut-être aisément changé en une autre forme de représentation, comme un graphique tridimensionnel.

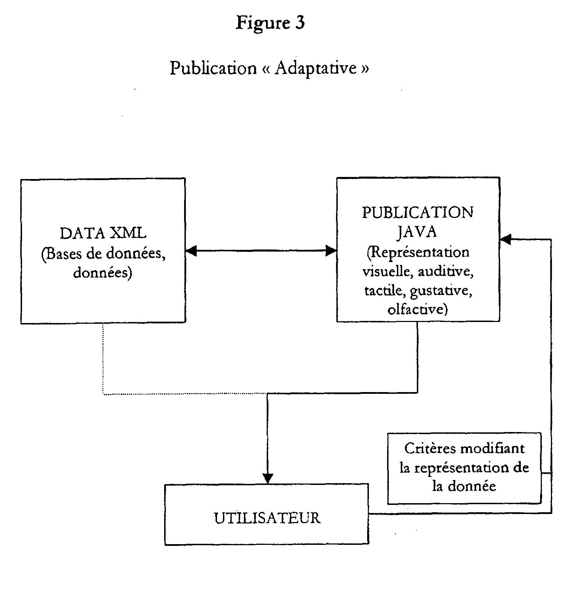

Par ailleurs, comme le montre la figure 3, en plus d'être maintenant « intelligente » grâce au langage Java, la donnée est aussi « capable d'adaptation » (ou « adaptative »). En effet, l'utilisateur peut donner accès à une fiche d'identification le concernant (âge, profession, signes particuliers... toute information qu'il jugera nécessaire pour améliorer la qualité ou l'utilité de la publication des documents sur la Toile). Cela peut se faire, par exemple, sous la forme d'un questionnaire à remplir en arrivant sur la base de données (site Web, CD-ROM, intranet) que l'utilisateur veut consulter, ou alors être une étape de personnalisation du browser. Le document XML sera publié différemment (grâce aux applets servant à sa publication) selon les informations données par l'utilisateur.

Ainsi, si l'utilisateur désire voir un petit conte mis en scène avec des acteurs et des répliques, mais que cet utilisateur est sourd ou qu'il ne possède pas de carte son, les répliques seront écrites dans des bulles au-dessus des personnages plutôt que parlées. Si l'utilisateur est daltonien, ou que son écran est monochrome (comme sur les ordinateurs de poche), ce ne seront pas des couleurs qui permettront de distinguer les différentes légendes d'un histogramme, mais des hachures, des pointillés ou autres critères facilement reconnaissables sans l'utilisation de la couleur.

En outre, ce procédé ne s'applique plus nécessairement à la seule publication, mais peut aussi être utilisé pour le traitement des données elles-mêmes. Ainsi prenons un exemple qui va combiner ces deux aspects. Un document XML est créé qui permet de réaliser un calcul entre deux valeurs. Le moyen de publication naturel d'une telle donnée serait une calculatrice. Dés lors, les différents nombres et opérations, codés en XML, sont publiés sous la forme d'une calculatrice à l'écran. Comme la publication est intelligente, les touches de la calculatrice seront sous forme de chiffres arabes dans les pays occidentaux, par exemple, mais sous forme d'idéogrammes au Japon. C'est toujours un chiffre auquel nous avons affaire, c'est juste sa représentation qui change.

Mais, en plus d'utiliser l'applet pour représenter la donnée en accord avec l'utilisateur (ici, c'est un critère culturel, voire linguistique), on peut utiliser une autre applet permettant de réaliser le calcul et de l'afficher dans une zone prévue à cet effet (qui serait publié sous l'apparence d'un petit écran LCD). Cette calculatrice serait entièrement autonome, car elle n'a besoin de rien d'autre qu'elle-même pour se décrire et d'une application (ou un browser) qui peut lire du Java.

On peut aussi appliquer ce procédé à la publicité : le message publicitaire peut rester le même tout en changeant sa publication selon les pays, les cultures.

Ce procédé peut aussi être utilisé pour coder l'information. En effet, la publication peut être un moyen de faire en sorte qu'une donnée illisible - parce que codée - devienne lisible. Ainsi, la donnée entre les tags XML définie par le créateur est le résultat d'un codage, qui peut-être décodée, en particulier, par une applet. Cette applet peut-être incluse dans le document, et ne contenir qu'une partie du moyen de décodage, l'autre partie pouvant résider sur la machine utilisateur ou sur un serveur distant Surtout l'utilisateur peut détenir la clef qui va permettre à l'applet de décoder la donnée. Sans cette clef, (comme un nombre permettant de savoir par quoi multiplier le code), l'applet java est inutile (même en cherchant à en percer le code). Dés lors, après vérification d'un mot de passe ou d'une clé, l'applet permet de publier - en décodant - la donnée propre du document XML.

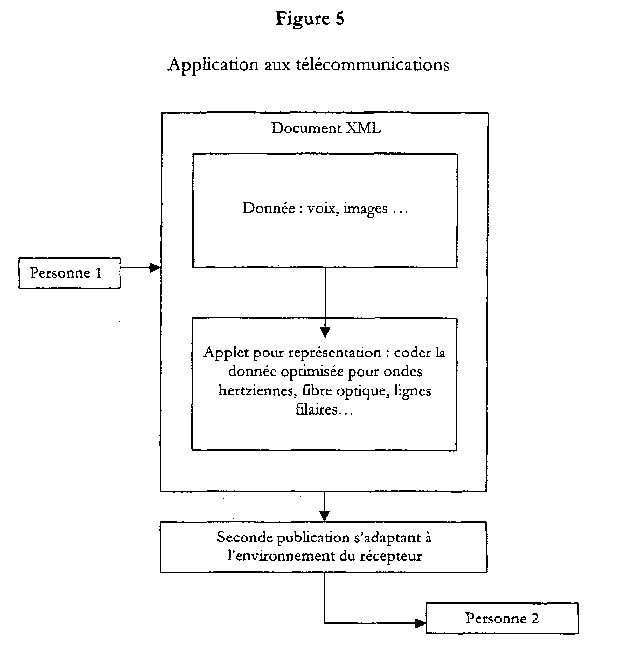

Nous pouvons aussi appliquer la présente invention au domaine des télécommunications, comme le montre la figure 5. La voix ou toute autre information (comme l'image, le son et plus globalement des données) peut être structurée à l'aide d'un markup language comme XML. La publication est la manière de rendre cette donnée à l'autre bout de la chaîne, donnée qui est entrée au début de la chaîne. En structurant au fur et à mesure cette donnée (« on-the-fly »), on lui donne alors, par la présente invention, la possibilité de s'autopublier, et ce de manière différente.

Prenons le principe du téléphone. Un utilisateur compose sur son téléphone portable ou non un numéro. Ce numéro est structuré comme une donnée XML pour en faciliter son traitement. La voix des deux interlocuteurs est codée en XML. La publication de cette donnée étant intelligente et adaptative, la voix peut être traitée différemment selon le lieu ou se trouve l'un des deux interlocuteurs. Si l'un se trouve dans un milieu bruyant, la voix sera filtrée avec un filtre plus adapté.

De plus, on peut considérer deux endroits où la donnée peut être publiée. Le premier est le téléphone lui-même, qui publie la voix en la restituant à l'interlocuteur d'une manière ou d'une autre. La deuxième est lors de l'émission de l'onde hertzienne par la station ou plus généralement le choix du support qui va transporter l'information. Ainsi, si l'utilisateur se trouve chez lui, et qu'il est connecté à des fibres optiques, c'est ce support qui sera utilisé, sinon, ce sera le support ligne filaire. Si l'interlocuteur se trouve sur la Lune, le support sera les ondes hertziennes. La donnée s'adapte au milieu qui la transmet. Encore, si le réseau est encombré à un endroit, elle choisira un chemin moins encombré.

En outre, il est possible de trouver la position approximative des interlocuteurs et d'adapter la donnée en conséquence. Ainsi, si l'interlocuteur recherche dans un annuaire mondial (les numéros de téléphone ne comprenant pas l'extension à l'international) le numéro de quelqu'un, cette donnée (le numéro de téléphone) sera publiée avec l'extension adéquate (i.e. sous forme textuelle ou alors en composant le numéro directement). Si l'interlocuteur se trouve dans le même pays, alors le numéro est utilisé tel quel, sinon, il lui est ajouté la bonne extension.

Il en est de même pour les systèmes de visio ou video conférences. La donnée qui est ici l'image et la voix s'adapte en fonction du support (écran monochrome, résolution de l'écran). On peut imaginer un système qui s'adapte au nombre de participants en attribuant un espace d'écran « intelligent » à chaque interlocuteur.

Ce procédé de donnée intelligente et capable d'adaptation peut être appliqué à tout document XML, HTML (bien que cela n'ait pas beaucoup d'intérêt, sauf pour la transition de la technologie HTML à la technologie XML) et plus généralement SGML ou tout autre markup language, mais il prend toute sa dimension XML, et tous les sous-ensembles de XML définissant un groupement de tags au sein d'une communauté (e-commerce, graphisme...). Il suffit pour cela de posséder un browser capable de lire du Java ou même une application capable de lire du Java. Ainsi, il est envisageable d'avoir une telle application dans des petits systèmes comme les téléphones mobiles, les écrans de télévision ou tout autre objet de la vie quotidienne susceptible d'avoir à publier des documents XML, et de pouvoir exécuter du code Java.

### 8/ Outil de création de documents auto-publiants et adaptatifs.

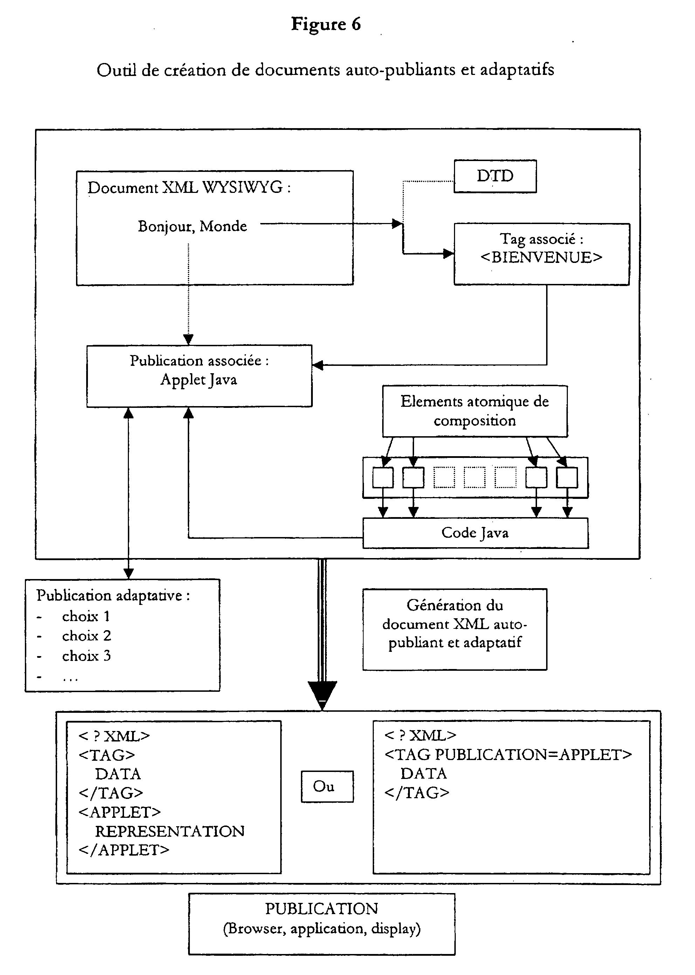

Jusqu'à présent, la présente invention a proposé une solution à un problème technique. Elle va en outre plus loin que cette seule solution car elle propose des applications dans différents domaines. Maintenant, si, grâce à ce système, il n'est plus un problème de coder ses données en XML et de les publier de manière intelligente et adaptative, nous allons proposer un moyen de créer de tels documents auto-publiants., comme suggéré dans la figure 6.

Ce document comprend donc la donnée à publier codée dans un markup language comme XML et une applet Java permettant de la publier. Pour créer un tel document XML, il faut donc tenir compte, entre autre, de ces deux aspects.

Le premier point est la création du document XML lui-même. L'Authoring Tool (« outil de création ») doit pouvoir générer du code XML au fur et à mesure que le créateur développe son document. Ainsi, il aura le choix entre écrire son code en XML et de spécifier sa DTD (Document Type Definition), de manière améliorée (présenté sous la forme d'un arbre pour la DTD par exemple ou encore incluant une reconnaissance de syntaxe affichant différentes couleurs pour différents objets au sein du document), ou alors le faire de manière WYSIWYG (What You See Is What You Get). Dans cette dernière possibilité, on peut envisager l'utilisateur écrire son document (ou l'importer d'un programme externe) et y définir pour chaque objet un tag associé (en double cliquant ou sélectionnant l'objet (mot, phrase, dessin...) pour faire apparaître une petite fenêtre, par exemple, pour y entrer l'identification du tag à associer). Ce tag serait alors inclus dans la DTD que l'utilisateur définit au fur et à mesure. L'interface lui permet de spécifier sa hiérarchie de tags.

Pour le second point, il faut écrire l'applet Java. Cette applet pourrait être écrite directement par un créateur connaissant le langage Java (ce qui serait tout de même une option de l'Authoring Tool), mais nous partons du principe que l'utilisateur ne connaît pas la programmation. Ainsi, la génération de cette applet Java doit se faire de manière intuitive et sans que l'utilisateur en prenne conscience. Serait proposés à l'utilisateur de l'Authoring Tool d'abord toute une palette des éléments les plus courant comme le texte, les images, les tableaux, ou plus simplement les types proposés par HTML actuellement (et avec lesquels il est maintenant familier). Mais il aurait aussi à sa disposition la possibilité de créer ses propres types de publication ou représentation, à la manière d'un jeu de construction, à partir de « briques » de bases. On pourrait comparer cette interface aux outils d'un logiciel de dessin, avec la particularité de générer du code Java en même temps.

Ainsi, comme le montre la figure 7, si l'utilisateur désire créer un tableau triangulaire, chose qu'il n'est pas possible en utilisant HTML, il va d'abord associer les éléments du tableau à la représentation d'une case (en dessinant un rectangle, par exemple, et en spécifiant où placer la donnée dans ce rectangle). Cette représentation est hautement générique, et permet de placer tout type de donnée dans cette case (qui peut avoir de bordure rouge, ou sous forme de pointillés...), ou alors un type particulier comme un entier par exemple (pour gérer les exceptions). Après avoir dessiné cette case grâce aux outils de publications et aux briques de bases qui lui sont proposés, il va ensuite les associer sous la forme du tableau triangulaire, par ligne et colonne. Les numéros de lignes et colonnes étant spécifiés avec la donnée dans le document XML sous forme d'attributs du tag, par exemple (<CASE ligne=1 colonne=2>). Au fur et à mesure, bien entendu, le code Java d'une telle représentation est généré.

Alors, il ne reste plus au créateur du document qu'à associer leurs représentations aux différents tags (qu'il a lui-même définis) et qui sont associées avec les données elles-mêmes.

Pour faciliter la création du document et pour pouvoir lire ce document XML et le représenter à l'écran, il est souhaitable d'avoir un « parser » (analyseur de syntaxe) XML et une application lisant et compilant du Java (qui peut-être du type Browser), qui seraient présents dans l'Authoring Tool. Il est aussi nécessaire d'écrire le document XML au fur et à mesure que celui-ci est créé. C'est ce document qui sera sauvegardé (avec les applets qu'il contient) et ensuite publier sur la Toile, ou par l'intermédiaire d'un CD-ROM, ou tout autre médium susceptible de transporter de l'information.

Comme il va de soi et comme il ressort de ce qui précède, l'invention ne se limite pas à la seule forme d'exécution de ce système de publication électronique universel et capable d'adaptation qui a été décrit ce dessus, à titre d'exemple, elle embrasse au contraire toutes les variantes de réalisation et d'application respectant le même principe. C'est ainsi notamment que la présente invention n'est nullement limitée, dans son application à la publication, au codage, aux télécommunications, au commerce électronique, à la publicité, à la domotique, aux systèmes embarqués, à la réalité virtuelle ou encore aux loisirs.

Nous avons donc proposée dans la présente invention :
1. - Une méthode, définie dans la revendication 1, de publication et de traitement de données structurées sous forme d'attributs par un logiciel de traitement de documents , éditées à l'aide d'un langage de marquage - en particulier XML - caractérisé en ce que les données incluses dans au moins un des attributs d'un document sont représentées par ce logiciel à l'aide d'au moins une routine associée à cet attribut dont le code est indépendant de la plate-forme sur laquelle s'exécute ledit logiciel et est fourni avec l'attribut, et en ce que la publication et/ou le traitement de ces données peut s'adapter au support en fonction de criteres utilisateurs, personnels, techniques, culturels ou globaux.
   - Cette méthode est, en outre, caractérisée en ce que la liste des attributs susceptibles d'être traités par ledit logiciel est infiniment extensible. Ainsi, ce peut être du graphisme (incluant les applications à la réalité virtuelle), du son, des éléments tactiles (comme le retour haptique), ou même des odeurs et des saveurs dans des systèmes d'immersion.
   - Cette méthode est aussi caractérisée en ce que ladite routine est codée comme une applet ou un programme dans un langage de programmation Java.
   - Cette méthode et aussi caractérisée
      - En ce que le logiciel de traitement comporte au moins un parmi des moyens de type signaux sonores, textes avec leur mise en page, des signaux vidéo, des signaux électriques analogiques et des signaux électriques digitaux et,
      - En ce qu'au moins un des attributs d'au moins un des documents est d'un type choisi parmi les types signaux sonores, textes avec leur mise en page, des signaux vidéo, des signaux électriques analogiques et des signaux électriques digitaux et,
      - En ce qu'au moins une des routines associées à chacun de ces types permet le traitement des données de ce type d'attribut par les moyens correspondants.
   - Cette méthode est aussi caractérisée
      En ce qu'elle permet la modification d'au moins une des données incluse dans au moins un des attributs sans en modifier la routine de traitement et,
      En ce qu'elle permet la modification d'au moins une des routines de traitement de donnée associée à au moins un des attributs sans modifier la donnée correspondante.
   Par exemple l'état du marché boursier peut-être publié toujours de la même manière, mais la donnée est mise à jour continuellement. Ou encore les comptes d'une entreprise pour une année sont fixes et la représentation en histogramme peut être changée en un autre type de graphique.
   - Cette méthode est aussi caractérisée en ce que le traitement de données par une au moins des routines associées à au moins un des attributs prend en compte des critères définis par l'utilisateur du logiciel - ou pour lui - pour une personnalisation de traitement.
   - Cette méthode est aussi caractérisée en ce que les critères sont choisis parmi des critères personnels (cécité, surdité), des critères techniques (caractéristiques techniques du support de la publication) et des critères globaux et culturels (préférences culturelles et linguistiques).
   Ainsi, si l'utilisateur a un écran monochrome, la représentation de la donnée se fera avec des signes distinctifs dans les formes et les hachures.
   - Cette méthode est aussi caractérisée en ce qu'au moins une des routines de traitement d'au moins un des attributs comprend une étape ou plusieurs étapes parmi une étape de codage, de cryptage, de décodage, de décryptage, de compression et de décompression.
   Ainsi une telle méthode peut être appliquée aux cryptage des chaînes télévisuelles cryptées.
   - Cette méthode est aussi caractérisée en ce que le logiciel de traitement de document est mis en oeuvre dans une application de contrôle à distance et que au moins une des routines de traitement d'au moins un des attributs comprend une ou plusieurs étapes de gestions d'exceptions susceptibles d'intervenir pendant le contrôle à distance.
   Par exemple, il est possible de faire le téléchargement d'un logiciel chez soi avec des routines pour le contrôle à distance (domotique) avec une liste d'attributs gérant le chauffage, l'alarme, tous les éléments de la maison. La gestion des erreurs permet d'éviter les accidents ménagers par exemple.
   - Cette méthode est aussi caractérisée en ce que le traitement peut se faire sur tout support susceptible de lire ledit document (ordinateurs d'Apple, PC, machines Unix, ordinateurs de poche, applications dans les systèmes embarqués, téléphones, machines virtuelles, que le support soit connecté ou non à au moins un réseau parmi Internet, intranet, ISDN, Advanced Intelligent Network, PSTN, mobile networks.
2. - On a aussi proposé un système défini dans la revendication 8, de publication et de traitement de données structurées dans un document édité à l'aide d'un logiciel de marquage - en particulier XML - comprenant des moyens informatiques d'exécution d'un logiciel de traitement de documents caractérisé en ce qu'il comprend de moyens d'exécution de routines associées à au moins un des attributs d'un document à traiter et codée dans un langage indépendant du système et des moyens de publication des dites données via le réseau téléphonique et par émission d'une onde hertzienne par une station, et en ce que la publication et/ou le traitement de ces données peut s'adapter au support en fonction de criteres utilisateurs, personnels, techniques, culturels ou globaux.
   - Un système, défini dans la revendication 9, d'édition de documents dans un langage de marquage, contenant des données structurées sous forme d'attributs est caractérisé en ce qu'il comprend :
      a) des moyens de création de routines, en langage indépendant du système, ou reconnu par le publiant, utilisé pour le traitement ultérieur du document, à partir d'opérations élémentaires pré-programmées pour la représentation complexe de données d'attributs,
      b) des moyens de création d'attributs,
      c) des moyens pour associer à chaque type d'attribut contenant des données une ou plusieurs routines de représentation complexe de ces données.
      d) Des moyens de génération de documents contenant des données structurées sous forme d'attributs ayant des routines associées permettant la représentation dynamique de données par un logiciel de traitement de documents.
   - Ce système est aussi caractérisé en ce qu'il comprend une interface utilisateur graphique incluant des moyens de sélection des opérations élémentaires pré-programmées pour la création de routines et de visualisation des documents en cours d'édition selon le principe WYSIWYG.
   - Enfin, ce système est caractérisé en ce que les routines associées aux attributs sont écrites dans un langage de programmation Java.

## Revendications

1. Méthode de traitement et de publication de données structurées sous forme d'attributs, par un système de traitement de documents, éditées à l'aide d'un langage de marquage - en particulier XML - **caractérisé en ce que** :
au moins une donnée incluse dans au moins un attribut d'un document est traitée par ledit système uniquement à l'aide d'au moins une routine capable d'être dynamiquement associée audit attribut, capable d'être autonome et indépendante dudit système, et capable d'être dynamiquement connectée, combinée et assemblée avec au moins une routine supplémentaire, en fonction d'au moins une donnée, en fonction d'au moins un attribut, en fonction du traitement d'au moins un service décrit et rendu en totalité ou en partie par au moins un document traité par ledit système, et en fonction du contexte dans lequel ledit service est traité et publié, dont le code est indépendant de la plate-forme d'exécution, capable d'être fourni avec au moins un attribut et capable d'être distribué sur au moins un ordinateur, et
le traitement et la publication de ladite donnée se fait à travers au moins un protocole - en particulier HTTP et IP - grâce à un mécanisme d'encapsulation, via le réseau téléphonique ou cablé, et via émission d'une onde hertzienne par une station, et
le traitement et la publication de ladite donnée peut s'adapter dynamiquement au support en fonction de critères utilisateurs, personnels, techniques, culturels ou globaux.

2. Méthode selon la revendication 1 **caractérisée en ce que** la liste des attributs susceptibles d'être traités par ledit système est extensible.

3. Méthode selon la revendication 1 **caractérisée en ce que** ladite routine est codée comme une applet ou un programme dans un langage de programmation Java.

4. Méthode selon la revendication 1 **caractérisée en ce qu'**au moins un des attributs d'au moins un des documents est d'un type choisi parmi les types signaux sonores, les textes avec leur mise en page, des signaux vidéo, des signaux électriques analogiques et des signaux électriques digitaux et **en ce que** au moins une des routines associées à chacun de ces types permet le traitement de la publication des données de ce type d'attribut par les moyens correspondants.

5. Méthode selon au moins une des revendications précédentes **caractérisée en ce qu'**au moins une des routines de traitement des attributs comprend une étape ou plusieurs étapes parmi une étape de codage, de cryptage, de décodage, de décryptage, de compression et de décompression.

6. Méthode selon au moins une des revendications précédentes **caractérisée en ce que** le système de traitement de document est mis en oeuvre dans une application de contrôle à distance et **en ce qu'**au moins une des routines de traitement d'au moins un des attributs comprend une ou plusieurs étapes de gestion d'exceptions susceptibles d'intervenir pendant le contrôle à distance.

7. Utilisation de la méthode selon les revendications 1 à 6 sur un support susceptible de lire et gérer le document tel que les ordinateurs d'Apple ™, les PCs, les machines Unix, les ordinateurs de poche, les systèmes embarqués, les téléphones, les machines virtuelles, et susceptible d'être connecté à au moins un réseau parmi Internet, Intranet, ISDN, Advanced Intelligent Network, PSTN, mobile network.

8. Système de traitement et de publication de données structurées sous forme d'attributs dans un document édité à l'aide d'un langage de marquage - en particulier XML - comprenant des moyens informatiques d'exécution d'un traitement de documents **caractérisé en ce qu'**il comprend :
des moyens d'exécution d'au moins une routine capable d'être dynamiquement associée à au moins un attribut d'un document à traiter, capable d'être autonome et indépendante dudit système, et capable d'être connectée, combinée, et assemblée avec au moins une routine supplémentaire, en fonction d'au moins une donnée, en fonction d'au moins un attribut, en fonction du traitement d'au moins un service décrit et rendu en totalité ou en partie par au moins un document traité par ledit système, et en fonction du contexte dans lequel ledit service est traité et publié, dont le code est indépendant de la plate-forme d'exécution, capable d'être fourni avec au moins un attribut et capable d'être distribué sur au moins un ordinateur, et
des moyens de traitement et de publication des dites données à travers au moins un protocole - en particulier HTTP et IP - grâce à un mécanisme d'encapsulation, via le réseau téléphonique ou cablé, et via émission d'une onde hertzienne par une station, et
des moyens permettant au traitement et à la publication de ces données de s'adapter dynamiquement, au support en fonction de critères utilisateurs, personnels, techniques, culturels ou globaux.

9. Système d'édition de documents dans un langage de marquage, contenant des données structurées sous forme d'attributs **caractérisé en ce qu'**il comprend :
des moyens de création de routines, en langage indépendant dudit système, ou reconnu par un publiant, utilisées pour le traitement ultérieur du document, à partir d'opérations élémentaires pré-programmées pour la représentation complexe de données d'attributs, et
des moyens de création d'attributs, et
des moyens pour associer à chaque type d'attribut contenant des données une ou plusieurs routines de représentation complexe de ces données, et
des moyens de génération de documents contenant des données structurées sous forme d'attributs ayant des routines associées permettant le traitement et la publication dynamique de données par un système de traitement de documents, et
des moyens de traitement et de publication desdites données à travers au moins un protocole - en particulier http et IP - grâce à un mécanisme d'encapsulation, via le réseau téléphonique ou cablé, et via émission d'une onde hertzienne par une station.

10. Système selon la revendication 9, **caractérisé en ce qu'**il comprend une interface utilisateur graphique incluant des moyens de sélection des opérations élémentaires pré-programmées pour la création de routines et de visualisation des documents en cours d'édition selon le principe WYSIWYG.

11. Système selon une des revendications 9 et 10 **caractérisé en ce que** les routines associées aux attributs sont écrites dans un langage de programmation Java.

## Patentansprüche

1. Verfahren zur Verarbeitung und Publikation von in Form von Attributen strukturierten Daten durch ein Dokumentenverarbeitungssystem, wobei diese Daten mithilfe einer Auszeichnungssprache - insbesondere XML - editiert werden, **dadurch gekennzeichnet, dass**:
mindestens eine in mindestens einem Attribut eines Dokuments enthaltene Datengröße von dem besagten System nur mithilfe von mindestens einer Routine verarbeitet wird, die fähig ist, dynamisch mit dem besagten Attribut verknüpft zu werden, selbständig und von dem besagten System unabhängig zu sein und dynamisch mit mindestens einer Zusatzroutine verbunden, kombiniert und assembliert zu werden, wobei dies in Abhängigkeit von mindestens einer Datengröße, in Abhängigkeit von mindestens einem Attribut, in Abhängigkeit von der Verarbeitung von mindestens einem Service, der von mindestens einem mit dem besagten System verarbeiteten Dokument vollständig oder teilweise beschrieben oder erbracht wird und in Abhängigkeit vom Kontext, in dem der besagte Service, dessen Code von der Ausführungsplattform unabhängig ist und der fähig ist, mit mindestens einem Attribut geliefert und auf mindestens einen Rechner verteilt zu werden, verarbeitet und publiziert wird, geschieht und
die Verarbeitung und die Publikation der besagten Datengröße über mindestens ein Protokoll - insbesondere HTTP und IP - dank einem Einkapselungsmechanismus über das Telefon- oder Kabelnetz und über Aussendung einer Hertzschen Welle durch eine Station erfolgen und
sich die Verarbeitung und die Publikation dieser Datengröße in Abhängigkeit von anwenderbezogenen, persönlichen, technischen, kulturellen oder globalen Kriterien dynamisch an den Träger anpassen können.

2. Verfahren nach Anspruch 1, **dadurch gekennzeichnet, dass** die Liste der Attribute, die von dem besagten System verarbeitet werden können, erweiterbar ist.

3. Verfahren nach Anspruch 1, **dadurch gekennzeichnet, dass** die besagte Routine als ein Applet oder ein Programm in der Programmiersprache Java kodiert ist.

4. Verfahren nach Anspruch 1, **dadurch gekennzeichnet, dass** mindestens eines der Attribute von mindestens einem der Dokumente einem unter den akustischen Signaltypen, den Texten mit ihrem Layout, Videosignalen, analogen elektrischen Signalen und digitalen elektrischen Signalen ausgewählten Typ angehört und dass mindestens eine der mit jedem dieser Typen verknüpften Routinen die Verarbeitung der Publikation der Daten dieses Attributtyps durch die entsprechenden Mittel ermöglicht.

5. Verfahren nach mindestens einem der vorangegangenen Ansprüche, **dadurch gekennzeichnet, dass** mindestens eine der Routinen zur Verarbeitung der Attribute mindestens einen oder mehrere Verfahrensschritte unter einem Kodierungs-, Verschlüsselungs-, Dekodierungs-, Entschlüsselungs-, Komprimierungs- und Dekomprimierungsschritt umfasst.

6. Verfahren nach mindestens einem der vorangegangenen Ansprüche, **dadurch gekennzeichnet, dass** das Dokumentenverarbeitungssystem in einer Fernsteuerungsanwendung eingesetzt wird und dass mindestens eine der Routinen zur Verarbeitung von mindestens einem der Attribute einen oder mehrere Verfahrensschritte zur Verwaltung von Ausnahmebedingungen, die während der Fernsteuerung eintreten könnten, umfasst.

7. Anwendung des Verfahrens nach einem der Ansprüche 1 bis 6 auf einem Träger, der das Dokument lesen und verwalten kann, wie beispielsweise Rechner von Apple™, PCs, Unix-Maschinen, Palmtops, Bordsysteme, Telefone, virtuelle Maschinen und der an mindestens ein Netz vom Typ Internet, Intranet, ISDN, Advanced Intelligent Network, PSTN, mobile network angeschlossen werden kann.

8. System zur Verarbeitung und Publikation von in Form von Attributen strukturierten Daten in einem mithilfe einer Auszeichnungssprache - insbesondere XML - editierten Dokument mit rechentechnischen Ausführungsmitteln einer Dokumentenverarbeitung, **dadurch gekennzeichnet, dass** es Folgendes umfasst:
Mittel zur Ausführung von mindestens einer Routine, die fähig ist, dynamisch mit mindestens einem Attribut eines zu verarbeitenden Dokumentes verknüpft zu werden, selbständig und von dem besagten System unabhängig zu sein, mit mindestens einer Zusatzroutine verbunden, kombiniert und assembliert zu werden, wobei dies in Abhängigkeit von mindestens einer Datengröße, in Abhängigkeit von mindestens einem Attribut, in Abhängigkeit von der Verarbeitung von mindestens einem Service, der von mindestens einem mit dem besagten System verarbeiteten Dokument vollständig oder teilweise beschrieben oder erbracht wird und in Abhängigkeit vom Kontext, in dem der besagte Service, dessen Code von der Ausführungsplattform unabhängig ist und der fähig ist, mit mindestens einem Attribut geliefert und auf mindestens einen Rechner verteilt zu werden, verarbeitet und publiziert wird, geschieht und
Mittel zur Verarbeitung und Publikation der besagten Daten über mindestens ein Protokoll - insbesondere HTTP und IP - dank einem Einkapselungsmechanismus über das Telefon- oder Kabelnetz und über die Aussendung einer Hertzschen Welle durch eine Station und
Mittel, die es der Verarbeitung und Publikation dieser Daten ermöglichen, sich in Abhängigkeit von anwenderbezogenen, persönlichen, technischen, kulturellen oder globalen Kriterien dynamisch an den Träger anzupassen.

9. System zum Editieren von Dokumenten in einer Auszeichnungssprache mit in Form von Attributen strukturierten Daten, **dadurch gekennzeichnet, dass** es Folgendes umfasst:
Mittel zur Erstellung von Routinen in einer von dem besagten System unabhängigen oder von einem Publisher erkannten Sprache, die für die spätere Verarbeitung des Dokumentes auf Grundlage vorprogrammierter elementarer Operationen für die komplexe Darstellung von Attributdaten verwendet werden und
Mittel zur Erstellung von Attributen und
Mittel, um an jeden Daten enthaltenden Attributtyp eine oder mehrere Routinen zur komplexen Darstellung dieser Daten anzuknüpfen und
Mittel zur Generierung von Dokumenten mit in Form von Attributen mit zugeordneten Routinen strukturierte Daten, die die dynamische Verarbeitung und Publikation durch ein Dokumentenverarbeitungssystem ermöglichen und
Mittel zur Verarbeitung und Publikation der besagten Daten über mindestens ein Protokoll - insbesondere HTTP und IP - dank einem Einkapselungsmechanismus über das Telefon- oder Kabelnetz und über die Aussendung einer Hertzschen Welle durch eine Station.

10. System nach Anspruch 9, **dadurch gekennzeichnet, dass** es eine grafische Anwenderschnittstelle mit Mitteln zur Auswahl vorprogrammierter elementarer Operationen zur Erstellung von Routinen und Visualisierung von Dokumenten, die sich im Editierungsprozess befinden, nach dem WYSIWYG-Prinzip umfasst.

11. System nach einem der Ansprüche 9 und 10, **dadurch gekennzeichnet, dass** die mit den Attributen verknüpften Routinen in einer Java-Programmiersprache geschrieben sind.

## Claims

1. Method for processing and publishing meta information, structured with meta tags, edited with a mark-up language - for instance XML - by a document processing system, **characterised by** the fact that :
at least one set of data included in at least one set of meta tags of a document is processed by said system just with at least one set of routines, capable of being dynamically combined to said set of meta tags, capable of being autonomous and independent from said system, capable of being dynamically connected, combined, and assembled with at least one set of additional routines, depending on at least one set of data, depending on at least one set of meta tags, depending on the processing of at least one set of services entirely or partly described and performed by at least one set of documents processed by said system, and depending on the context in which said service is processed and published, whose the code is programmed in any programming language, capable of being provided with at least one set of meta tags and capable of being distributed on at least one computer, and
processing and publishing of said data are performed through at least one protocol - for instance HTTP and IP - thanks to an encapsulation mechanism, via the telephone or cable networks and via wireless networks, and
processing and publishing of said data are dynamically self adaptive depending on user's personal, technical, cultural or global criteria.

2. Method according to claim 1 wherein said set of meta tags, capable of being processed by said system, is extensible.

3. Method according to claim 1 wherein said routines are programmed like Java applets or Java programs.

4. Method according to claim 1 wherein at least one set of meta tags of at least one set of documents comprises a type among sound signal types, text with layout types, video signal types, analogous electrical signal types, and digital electrical types, and at least one set of routines combined with said type performs data processing of said one set of meta tags type by matching means.

5. Method according to any of the preceding claims wherein at least one set of routines of at least one set of meta tags comprises at least one set of steps among encoding steps, encrypting steps, decoding steps, decrypting steps, compressing and decompressing steps.

6. Method according to any of the preceding claims wherein said document processing system is applied to a remote control application and said at least one set of routines combined to at least one set of meta tags comprises at least one set of exception management steps for exceptions able to appear during the remote control application.

7. Use of the method according to any one of claims 1 to 6 on a platform able to read and manage documents like Apple^{TM} computers, PCs, Unix machines, pocket computers, embedded systems, telephones, virtual machines and able to be connected to at least one set of networks among Internet, Intranet, ISDN, Advanced Intelligent Networks, PSTN, and mobile networks.

8. System for processing and publishing meta information, structured with meta tags in a document, edited with a mark-up language - for instance XML, comprising computer means for performing document processing, **characterised by** the fact that it comprises:
means for processing at least one set of routines, capable of being dynamically combined to said set of meta tags, capable of being autonomous and independent from said system, capable of being dynamically connected, combined, and assembled with at least one set of additional routines, depending on at least one set of data, depending on at least one set of meta tags, depending on the processing of at least one set of services entirely or partly described and performed by at least one set of documents processed by said system, and depending on the context in which said service is processed and published, whose the code is programmed in any programming language, capable of being provided with at least one set of meta tags and capable of being distributed on at least one computer, and
means for performing the processing and publishing of said data through at least one protocol - for instance HTTP and IP - thanks to an encapsulation mechanism, via the telephone or cable networks and via wireless networks, and
means for dynamically adapting the processing and publishing of said data depending on user's personal, technical, cultural or global criteria.

9. Document editing system with a mark-up language, including meta information structured with meta tags comprising :
means for creating routines, in a system independent language, or known by the creator, used for a later document processing, with simple basic pre-programmed operations for complex processing of meta information of meta tags, and
means for meta tags creation, and
means for combining each meta tags type including meta information with at least one set of routines for complex processing of meta information, and
means for documents generation comprising meta information structured with meta tags combined with at least one set of routines allowing dynamic data processing and publishing by a document processing system, and
means for performing the processing and publishing of said data through at least one protocol - for instance HTTP and IP - thanks to an encapsulation mechanism, via the telephone or cable networks and via wireless networks, and
means for dynamically adapting the processing and publishing of said data depending on user's personal, technical, cultural or global criteria.

10. System according to claim 9 comprising a graphical user interface including means for the selection of the said simple basic pre-programmed operations for the creation of routines and means for the visualisation of the document editing process according to WYSIWIG principle.

11. System according to claims 9 and 10 **characterised by** the fact that routines combined with meta tags are programmed in Java.
